# FASCICULE DE BREVET EUROPEEN

(11) **EP 3 030 447 B1**
(45) Date de publication et mention de la délivrance du brevet: **21.06.2017**
(21) Numéro de dépôt: 14748240.0
(22) Date de dépôt: 04.07.2014
(51) Int. Cl.: B60L 3/00, B60L 7/18, B60L 7/26, B60W 30/18, F16D 61/00, B60W 30/09, B60W 20/14, B60W 10/184, B60W 10/08, B60T 7/04, B60T 13/58, B60T 1/10

(54) **CONTROLE DU FREINAGE REGENERATIF DANS UN VEHICULE ELECTRIQUE OU HYBRIDE**
REGELUNG DER REGENERATIVEN BREMSUNG IN EINEM ELEKTRO- ODER HYBRIDFAHRZEUG
CONTROL OF REGENERATIVE BRAKING IN AN ELECTRIC OR HYBRID VEHICLE

(30) Priorité: 06.08.2013 FR 1357801
(43) Date de publication de la demande: 15.06.2016
(73) Titulaire: Renault S.A.S., 92100 Boulogne-Billancourt (FR)
(72) Inventeur: AZZI, Hamid, F-78310 Maurepas (FR)
(86) Numéro de dépôt international: PCT/FR2014/051731
(87) Numéro de publication internationale: WO 2015/018993

(56) Documents cités:
- EP-A1- 0 754 588
- DE-A1-102007 056 359
- JP-A- 2013 132 979
- US-A1- 2007 018 499
- US-A1- 2011 125 354
- US-A1- 2011 221 265

## Description

L'invention concerne le contrôle du freinage régénératif dans un véhicule équipé d'un premier moyen de freinage, régénératif, et d'un deuxième moyen de freinage, distinct du premier moyen de freinage, par exemple un moyen de freinage hydraulique.

Le véhicule peut par exemple être un véhicule électrique ou hybride.

Sur un véhicule équipé d'au moins un moteur de traction ou de propulsion électrique, il est possible, sous certaines conditions, d'utiliser le moteur électrique comme générateur et d'obtenir ainsi un moyen de freinage électrique. Une telle utilisation est avantageuse, car, régénérative, elle permet de récupérer une partie de l'énergie cinétique du véhicule afin de recharger les batteries.

Dans le cas d'un freinage découplé, le véhicule peut par exemple comporter un module de répartition (« Torque Blending » en anglais) agencé pour répartir une commande de freinage globale, issue de la pédale de frein, entre un actionneur électrique et un actionneur hydraulique. On parle alors de consignes de freinage complémentaires.

Selon un autre exemple, et en particulier dans le cas d'un véhicule à freinage non découplé, un véhicule peut comprendre un module de gestion de freinage (« Torque Manager» en anglais) agencé pour générer une consigne de freinage électrique fonction de la consigne conducteur, par exemple proportionnelle à cette consigne conducteur. La consigne de freinage électrique est alors une consigne de freinage supplémentaire, venant s'ajouter au freinage hydraulique classique, obtenu directement de la pédale de frein.

La consigne de freinage régénérative, qu'elle soit complémentaire ou supplémentaire, est élaborée en fonction non seulement de la consigne conducteur, issue d'une pédale de frein, et également en fonction d'autres paramètres, dont un signal indicatif de la stabilité du véhicule.

En effet, le freinage électrique s'applique uniquement aux roues motrices, c'est-à-dire à la ou les roue(s) avant(s) dans le cas d'un véhicule à traction, ou à la ou les roue(s) arrière(s) dans le cas d'un véhicule en propulsion. Le potentiel de freinage régénératif est donc plus limité qu'un freinage appliqué sur l'ensemble des roues.

Ce freinage régénératif risque donc de provoquer des glissements plus importants sur les roues concernées, voire même de provoquer un blocage des roues lorsque les conditions d'adhérence sont relativement précaires, par exemple dans le cas d'une chaussée mouillée ou recouverte de glace ou de neige.

Il est connu de désactiver le freinage régénératif lorsqu'un système de sécurité actif, par exemple un système d'anti-blocage des roues, par exemple l'ABS (de l'allemand « AntiBlockerSystem ») et/ou un système d'anti-patinage des roues, comme par exemple un système ESC (de l'anglais « Electronic Stability Control »), détecte une situation à risque, par exemple lorsqu'un signal de drapeau élaboré par ce système de sécurité actif passe à 1.

Ces systèmes de sécurité actifs sont en communication avec un ou plusieurs capteurs aptes à fournir des informations sur l'état des roues.

Lorsque le signal de drapeau repasse à zéro, c'est-à-dire lorsque les signaux issus des systèmes de sécurité actif correspondent à une situation suffisamment peu risquée, le freinage régénératif est à nouveau autorisé.

Ainsi, la demande FR2972411 divulgue un tel signal de drapeau désigné « indicateur de stabilité ». Cependant, sa complexité de conception et de mise au point (notamment le calcul de l'indicateur à partir de consignes de correction de survirage, de correction de sous-virage et de décélération) la rendent relativement coûteuse.

La demande de brevet US 2011/0125354 divulgue une méthode de régulation du freinage récupératif en fonction du coefficient de friction de la route.

Il existe un besoin pour un contrôle de freinage régénératif offrant davantage de sécurité à moindre coût.

Il est proposé un procédé de contrôle de freinage régénératif d'un véhicule selon la revendication 1. Le signal de commande ainsi élaboré peut être transmis vers un module de génération d'une consigne de freinage régénérative, par exemple un module de répartition, un module de gestion de freinage, ou autre.

Ainsi, passé un certain nombre d'activations de la régulation par le système de sécurité actif, on présume en quelques sortes que l'adhérence est précaire et on impose le calcul de la consigne de freinage régénératif selon un deuxième mode de calcul, de façon à limiter le freinage régénératif.

Dans un mode de réalisation avantageux, lorsque la consigne de freinage régénératif est générée selon le deuxième mode de calcul, cette consigne est nulle, c'est-à-dire qu'il n'y a plus de freinage régénératif.

Le système de sécurité actif peut par exemple comprendre un système ABS, un système AYC (de l'anglais « Active Yaw Control »), un système MSR (de l'allemand « Motor Schlepp Regelung ») un système ASR (de l'anglais « Acceleration Slip Regulation »), un système EBD (de l'anglais « Electronic Brakeforce Distribution »), un système ESC (de l'anglais « Electronic Stability Control »), et/ou autre.

En particulier, le signal de drapeau reçu peut être issu de plusieurs systèmes de sécurité actifs. On pourra par exemple prévoir d'appliquer un OU logique aux différents signaux de drapeaux issus de différents systèmes de sécurité actifs respectifs.

Avantageusement et de façon non limitative, on pourra prévoir un filtrage temporel du signal de drapeau. Ainsi, une condition d'incrémentation du compteur est que le signal de drapeau ayant changé de valeur reste à la valeur correspondant à une activation de la régulation par le système de sécurité actif pendant un laps de temps donné. Le filtrage peut ainsi être réalisé par l'intermédiaire d'un filtre à retard de changement d'état. Ceci peut permettre d'éviter d'incrémenter le compteur lorsque le système de sécurité actif impose une régulation pendant un laps de temps relativement court. Ceci peut permettre de n'incrémenter le compteur que pour des activations ayant des origines différentes, ou autrement dit, d'éviter d'incrémenter le compteur pour des activations ayant une même origine.

Avantageusement et de façon non limitative, on peut recevoir un signal de pression maître-cylindre et comparer ce signal à un seuil de pression et interdire l'incrémentation du compteur lorsque la pression de maître cylindre est supérieure à ce seuil de pression. Dit autrement, on ne prend en compte des changements d'état du signal de drapeau vers un état correspondant à une activation de la régulation du système de sécurité actif que lorsque le freinage imposé par le conducteur est relativement faible. En effet, le signal de drapeau est susceptible d'indiquer une régulation, par exemple une régulation ESC lorsque le freinage du conducteur est relativement fort, par exemple dans le cas d'une conduite relativement sportive. La prise en compte de la pression maître cylindre permet ainsi de ne considérer que les petits freinages. On estime en quelques sortes que si le système de sécurité actif a effectué une régulation sur un freinage relativement faible, alors l'adhérence est vraisemblablement précaire et la perte d'adhérence est probablement d'origine involontaire.

Bien entendu, l'invention n'est en rien limitée à une prise en compte de la pression maître-cylindre. En particulier on pourra utiliser d'autres paramètres estimés ou mesurés permettant d'interpréter la volonté du conducteur, notamment une valeur de décélération du véhicule.

L'invention n'est pas limitée par la façon dont le compteur est remis à 0. On pourra par exemple prévoir une remise à 0 en fin de mission ou en début de mission. Selon un autre exemple, on pourra prévoir la possibilité de décrémentation du compteur, par exemple lorsque la pression de freinage est supérieure à un seuil et que le signal de drapeau reste dans un état correspondant à une non activation de la régulation par le système de sécurité actif, et ce tout en interdisant au compteur de passer en-deçà de 0. Ainsi si les conditions d'adhérence sont suffisamment bonnes pour que le système de sécurité actif n'impose pas de régulation, alors que le freinage est relativement fort, la consigne de freinage régénératif peut être amenée à être à nouveau élaborée suivant le premier mode de calcul.

L'invention peut trouver une application particulièrement avantageuse dans le cas de véhicules à propulsion, car lorsque le freinage régénératif s'applique aux roues arrière, la stabilité du véhicule peut être relativement critique. Un angle volant relativement léger risque d'entraîner un tête à queue.

Bien entendu, l'invention n'est pas limitée à cette application, et on pourra bien entendu prévoir d'utiliser l'invention dans le cas d'un véhicule à traction.

Le deuxième moyen de freinage peut être découplé de la pédale ou non.

La consigne de freinage régénérative peut par exemple être complémentaire d'une consigne de freinage non-régénérative appliquée par le deuxième moyen de freinage, supplémentaire par rapport au freinage appliqué par ce deuxième moyen de freinage, ou autre.

Il est en outre proposé un produit programme d'ordinateur comprenant des instructions pour effectuer les étapes de procédé décrits ci-dessus lorsque ces instructions sont exécutées par un processeur. Ce programme peut par exemple être stocké sur un support mémoire, par exemple, un disque dur, ou bien encore être téléchargé ou autre.

Il est en outre proposé un dispositif de contrôle de freinage régénératif d'un véhicule selon la revendication 5. Ce dispositif peut ainsi permettre d'exécuter le procédé décrit ci-dessus. Ce dispositif peut par exemple comprendre ou être intégré dans plusieurs processeurs de traitement du signal, par exemple un microcontrôleur, un microprocesseur ou autre.

Les moyens de réception peuvent par exemple comprendre, un port d'entrée, une broche d'entrée ou autre. Les moyens de traitement peuvent par exemple un coeur de processeur ou CPU (de l'anglais « Central Processing Unit ») ou autre. Le dispositif peut comprendre des moyens de transmission du signal de commande vers un module de génération de consigne de freinage régénératif, par exemple un port de sortie, une broche de sortie, ou autre.

Il est en outre proposé un système de contrôle de freinage régénératif comprenant un module de génération d'une consigne de freinage régénérative apte à générer une consigne de freinage régénérative en fonction d'un signal de requête de freinage issu d'une pédale conducteur du véhicule selon un premier mode de calcul et selon un deuxième mode de calcul, et un dispositif de contrôle tel que décrit ci-dessus.

Le module de génération peut comprendre un module de gestion de freinage agencé pour calculer la valeur de consigne de freinage régénératif en multipliant une valeur de freinage représentative du freinage effectué par le deuxième moyen de freinage par un coefficient fonction du mode de calcul imposé.

Il est en outre proposé un véhicule, par exemple un véhicule automobile, comprenant le dispositif de contrôle décrit ci-dessus.

Le véhicule peut comprendre en outre un moyen de freinage régénératif, par exemple un actionneur électrique, et un moyen de freinage non régénératif, par exemple un actionneur hydraulique.

L'invention peut trouver une application sur tous les véhicules qui possèdent un actionneur de couple permettant de récupérer de l'énergie, c'est-à-dire notamment les véhicules électriques ou hybrides, et également les véhicules thermiques équipés avec un alternateur, par exemple un alterno-démarreur permettant un couple de freinage important.

L'invention sera mieux comprise en référence aux figures, lesquelles illustrent des modes de réalisation non limitatifs.
La figure 1 montre un exemple de véhicule selon un mode de réalisation de l'invention.
La figure 2 montre un exemple de dispositif de contrôle du freinage régénératif, selon un mode de réalisation de l'invention.

Des références identiques peuvent être utilisées d'une figure à l'autre pour désigner des éléments identiques ou similaires dans leur forme ou dans leur fonction.

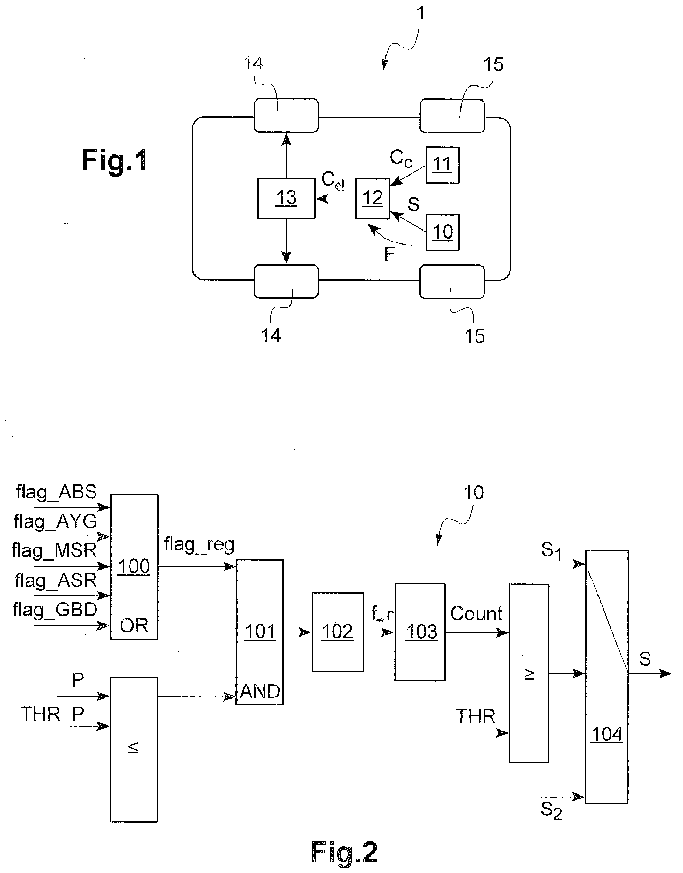

En référence à la figure 1, un véhicule électrique ou hybride 1 comprend des roues 14, 15, et un moteur électrique 13 apte à entraîner en mouvement les roues arrière 14, ou à freiner ces roues arrière 14 de façon à recharger une batterie non représentée.

Un module de génération 12 d'une consigne de freinage régénérative, par exemple d'une consigne de freinage électrique Cₑₗ permet de générer cette valeur de consigne Cₑₗ selon un premier mode de calcul, en fonction d'une valeur de consigne conducteur C_{c} issue d'un module de calcul de requête conducteur 11 ou DRC (de l'anglais « Driver Request Calculation »).

Ce module de calcul 11 reçoit en entrée une valeur d'information quant au statut des freins ou BLS (de l'anglais « Brake infos status » ) et une valeur de pression maître-cylindre, non représentées sur la figure 1. Ce module 11 génère ainsi un signal de consigne C_{c} à partir de valeurs issues de capteurs.

Le module 12 est agencé pour appliquer un coefficient multiplicateur, par exemple égal à 0,1, à cette valeur de consigne C_{c}, et obtenir ainsi la valeur de consigne de freinage électrique Cₑₗ.

Dit autrement, lorsque cette valeur de consigne électrique Cₑₗ est obtenue selon le premier mode de calcul, cette valeur de consigne est choisie égale à 10% du signal de requête de freinage C_{c} issue de la pédale conducteur. Il s'agit donc d'un freinage électrique supplémentaire venant s'additionner au freinage hydraulique réalisé directement à partir de la pédale de frein, sans découplage.

Un dispositif de contrôle de freinage 10 reçoit des signaux de drapeaux issus de différents systèmes de sécurité actifs non représentés, par exemple un système ABS, d'un système AYC et/ou autre. Lorsque l'un de ces signaux de drapeaux est égal à 1, le dispositif 10 génère un signal de drapeau global F qui prend alors la valeur 1, et, tant que ce signal F est égal à 1, c'est-à-dire que tant que l'un des systèmes de sécurité actifs a activé une régulation, la consigne de freinage électrique Cₑₗ est nulle.

En outre, le dispositif 10 est agencé pour incrémenter un compteur à chaque passage à 1 d'un signal de drapeau obtenu à partir des différents signaux de drapeaux des différents systèmes de sécurité actifs. Lorsque ce compteur atteint un seuil alors un signal F issu du dispositif 10 prend une valeur correspondant à une interdiction définitive du freinage régénératif.

La figure 2 montre un exemple plus précis d'un dispositif de contrôle, selon un mode de réalisation de l'invention.

Dans ce mode de réalisation, le dispositif 10 comprend une porte OU 100 recevant en entrée différents signaux de drapeaux issus de différents systèmes de sécurité actifs respectifs, par exemple un drapeau flag_ABS issu d'un système ABS, un drapeau flag_AYC issu d'un système AYC, un drapeau flag_MSR issu d'un système MSR, un drapeau flag_ASR issu d'un système ASR, un drapeau flag_EBD issu d'un système EBD.

Le signal flag_reg issu de cette porte OU 100 est reçu en entrée d'une porte ET 101. Cette porte ET reçoit par ailleurs un signal prenant une valeur 1 lorsqu'une valeur de pression maître-cylindre P est inférieure à un seuil de pression maitre-cylindre THR_P. Ainsi, le signal obtenu à partir de la porte ET 101 est égale à 1 seulement si la pression de maître-cylindre est inférieure à un seuil, et si le signal flag_reg est égal à 1.

Ce signal est reçu dans un module de filtrage 102 dans lequel on réalise un filtrage des états hauts, lorsque leur durée est trop courte. Dit autrement, si le signal issu de la porte ET 101 a une valeur égale à 1 pendant une durée inférieure à un laps de temps donné, alors, le signal f_r issu du module de filtrage 102 reste nul.

Le signal f_r issu de ce module 102 est reçu par un module de comptage 103 agencé pour être incrémenté à chaque front montant du signal entrant.

Dans un mode de réalisation préféré, seuls les fronts montants du signal f_r conduisent à une incrémentation du signal Count.

Dans un mode de réalisation alternatif, le signal Count est incrémenté à chaque font montant du signal f_r et chaque fois que le signal f_r a une valeur haute pendant un laps de temps prédéterminé. Ainsi on prend en quelque sorte en compte la durée des périodes de signal haut du signal f_r. De la valeur de ce laps de temps prédéterminé et des incréments respectifs dépendent le poids relatif de la durée des périodes de signal haut et des fronts montants. Par exemple, on peut choisir un laps de temps d'une minute, et des incréments de 1 dans els deux cas : un signal haut durant 20 secondes conduira à une incrémentation de 1, tandis qu'un signal haut de 70 secondes conduira à une incrémentation de 1+1 = 2 du compteur. Le laps de temps prédéterminé peut bien entendu avoir une durée moindre, par exemple une seconde.

Pour revenir à la figure 2, le signal Count ainsi obtenu est alors comparé à un seuil THR. Si signal Count atteint ou dépasse ce seuil THR, alors un module de bascule 104 générant le signal S fait passer ce signal S d'une valeur S₁ à une valeur S₂. La valeur S₁ correspond à une limite de freinage régénératif relativement élevé, tandis que la valeur S₂ correspond à une limite de freinage régénératif relativement faible, par exemple 0.

Dit autrement, lorsque le signal S passe de la valeur S₁ à la valeur S₂, le module référencé 12 sur la figure 1 passe d'un premier mode de calcul de la consigne Cₑₗ, notamment en appliquant un coefficient à la valeur de consigne conducteur C_{c}, à un deuxième mode de calcul dans lequel cette valeur de consigne de freinage électrique Cₑₗ est nulle.

Dans ce mode de réalisation, le compteur n'est remis à 0 qu'après extinction du dispositif, c'est-à-dire en fin de mission.

Par ailleurs, le signal F, indicateur de la stabilité, de la figure 1 peut être le signal flag_reg issu du module 100 ou bien le signal issu du module 101, ou bien encore le signal f_r issu du module 102.

Dans ce mode de réalisation, le véhicule 1 est un véhicule à traction, le freinage électrique s'appliquant uniquement aux roues motrices arrière 14, donc avec un potentiel de freinage plus limité qu'un freinage sur l'ensemble des roues. Il existe un risque de glissement plus important sur les roues arrière, ce qui risque de provoquer un blocage des roues lorsque les conditions d'adhérence sont relativement précaires.

Le procédé décrit ci-dessus basé sur un comptage des activations durables et vraisemblablement liées à l'état de la chaussée, des systèmes de régulation actif, peut ainsi permettre de diagnostiquer un état de la chaussée correspondant à des conditions d'adhérence précaires, et d'interdire tout freinage électrique lorsque ce diagnostic est effectué.

De telles conditions d'adhérence précaire peuvent par exemple être liées à la présence de glace, de neige, ou bien simplement au fait que la chaussée est mouillée.

Le compteur de régulation mis en place peut ainsi venir compléter l'indicateur de stabilité, connu de l'art antérieur.

L'invention n'est pas limitée à une prohibition du freinage électrique lorsque le compteur atteint un seuil. On pourrait par exemple prévoir d'autoriser le freinage électrique, mais avec une puissance moindre que lorsque la consigne Cₑₗ est générée selon le premier mode de calcul. Par exemple, les procédés mis en oeuvre dans le module référencé 12 sur la figure 1 peuvent être identiques à un mode de calcul à l'autre, à ceci près que le coefficient appliqué à la consigne de freinage du conducteur C_{c} est moindre que le deuxième mode de calcul. Par exemple, ce coefficient peut être de 10% ou 20% dans le premier mode de calcul, et de seulement 1 ou 2% dans le deuxième mode de calcul. Dit autrement, le freinage électrique supplémentaire appliqué est bien moindre après que l'on ait diagnostiqué un état d'adhérence peu satisfaisant

## Revendications

1. Procédé de contrôle de freinage régénératif d'un véhicule équipé d'un premier moyen de freinage, régénératif, et d'un deuxième moyen de freinage distinct du premier moyen de freinage, et conçu pour générer une consigne de freinage régénératif en fonction d'un signal de requête de freinage issu d'une pédale conducteur du véhicule, selon un premier mode de génération de consigne, le procédé comprenant :
recevoir un signal de pression maître-cylindre (P) et le comparer à des seuils de pression,
recevoir un signal de drapeau (flag_reg) issu d'un système de sécurité actif du véhicule,
détecter les changements de valeurs du signal de drapeau reçu,
- lorsque le signal de drapeau reçu change de valeur pour prendre une valeur correspondant à une activation d'une régulation par le système de sécurité actif, incrémenter une valeur de compteur (Count) si la pression du maître-cylindre est inférieure à un premier seuil de pression (THR_P),
- lorsque la pression du maître-cylindre dépasse un deuxième seuil de pression, décrémenter la valeur de compteur (Count) si le signal de drapeau reste à une valeur correspondant à une non-activation d'une régulation par le système de sécurité actif,
- comparer le compteur à un seuil (THR), et si le compteur atteint ledit seuil, élaborer un signal de commande (S) de façon à mettre fin à la génération de la consigne de freinage régénératif selon le premier mode de calcul et à imposer une génération de cette consigne de freinage régénératif selon un deuxième mode de calcul.

2. Procédé de contrôle selon la revendication 1, dans lequel lorsque la consigne de freinage régénératif est générée selon le deuxième mode de calcul, cette consigne est nulle.

3. Procédé de contrôle selon l'une quelconque des revendications 1 à 2, comprenant une étape consistant à appliquer un filtrage temporel (102) au signal de drapeau reçu préalablement à l'étape de détection de changement de valeurs.

4. Produit programme d'ordinateur comprenant des instructions pour effectuer les étapes de procédé selon l'une quelconque des revendications 1 à 3 lorsque ces instructions sont exécutées par un processeur.

5. Dispositif de contrôle de freinage régénératif (10) d'un véhicule équipé d'un premier moyen de freinage, régénératif, et d'un deuxième moyen de freinage distinct du premier moyen de freinage, et conçu pour générer une consigne de freinage régénératif en fonction d'un signal de requête de freinage issu d'une pédale conducteur du véhicule, selon un premier mode de génération de consigne, le dispositif comprenant :
des moyens de réception pour recevoir un signal de pression maître-cylindre (P) et des moyens de comparaison pour comparer la valeur du signal à des seuils de pression, et
des moyens de réception pour recevoir un signal de drapeau (flag_reg) issu d'un système de sécurité actif du véhicule, et
des moyens de traitement agencés de façon à détecter les changements de valeurs du signal de drapeau reçu,
- incrémenter une valeur de compteur (Count) lorsque le signal de drapeau reçu change de valeur pour prendre une valeur correspondant à une activation d'une régulation par le système de sécurité actif si la pression du maître-cylindre est inférieure à un premier seuil de pression (THR_P),
- décrémenter la valeur de compteur (Count) lorsque la pression du maître-cylindre dépasse un deuxième seuil de pression, si le signal de drapeau reste à une valeur correspondant à une non-activation d'une régulation par le système de sécurité actif,
- comparer le compteur à un seuil (THR), et élaborer si le compteur atteint ledit seuil un signal de commande (S) de façon à mettre fin à la génération de la consigne de freinage régénératif selon le premier mode de calcul et à imposer une génération de cette consigne de freinage régénératif selon un deuxième mode de calcul.

6. Système de contrôle de freinage régénératif d'un véhicule équipé d'un premier moyen de freinage (13), régénératif, et d'un deuxième moyen de freinage distinct du premier moyen de freinage, comprenant
un module de génération d'une consigne de freinage régénérative (12) apte à générer la consigne de freinage régénérative en fonction d'un signal de requête de freinage issu d'une pédale conducteur du véhicule selon un premier mode de calcul et selon un deuxième mode de calcul, et
un dispositif de contrôle (10) selon la revendication 5.

7. Système selon la revendication 6, dans lequel le module de génération comprend un module de gestion de freinage (12) agencé pour calculer la valeur de consigne de freinage régénératif en multipliant une valeur de freinage représentative du freinage effectué par le deuxième moyen de freinage (C_{c}) par un coefficient fonction du mode de calcul imposé.

8. Véhicule automobile (1) comprenant le système de contrôle selon la revendication 7.

9. Véhicule automobile (1) selon la revendication 8, comprenant un actionneur électrique (13) apte à exercer un freinage sur les roues arrière (14).

## Patentansprüche

1. Verfahren zur Steuerung der regenerativen Bremsung eines Fahrzeugs, das mit einem ersten, regenerativen Bremsmittel und mit einem zweiten Bremsmittel, das von dem ersten Bremsmittel verschieden ist, ausgestattet ist und dafür ausgelegt ist, einen Sollwert der regenerativen Bremsung in Abhängigkeit von einem Bremsanforderungssignal, das von einem Fahrerpedal des Fahrzeugs ausgegeben wird, gemäß einer ersten Art der Sollwerterzeugung zu erzeugen, wobei das Verfahren umfasst:
Empfangen eines Drucksignals des Hauptbremszylinders (P) und Vergleichen desselben mit Druckschwellenwerten,
Empfangen eines Flagsignals (flag_reg), das von einem aktiven Sicherheitssystem des Fahrzeugs ausgegeben wurde,
Erkennen der Änderungen von Werten des empfangenen Flagsignals,
- wenn das empfangene Flagsignal seinen Wert ändert, um einen Wert anzunehmen, der einer Aktivierung einer Regelung durch das aktive Sicherheitssystem entspricht, Inkrementieren eines Zählerwertes (Count), falls der Druck des Hauptbremszylinders niedriger als ein erster Druckschwellenwert (THR P) ist,
- wenn der Druck des Hauptbremszylinders einen zweiten Druckschwellenwert überschreitet, Dekrementieren des Zählerwertes (Count), falls das Flagsignal auf einem Wert bleibt, der einer Nichtaktivierung einer Regelung durch das aktive Sicherheitssystem entspricht,
- Vergleichen des Zählers mit einem Schwellenwert (THR), und
falls der Zähler diesen Schwellenwert erreicht, Erzeugen eines Steuersignals (S), um die Erzeugung des Sollwertes der regenerativen Bremsung gemäß der ersten Berechnungsart zu beenden und eine Erzeugung dieses Sollwertes der regenerativen Bremsung gemäß einer zweiten Berechnungsart zu vorzuschreiben.

2. Verfahren zur Steuerung nach Anspruch 1, wobei, wenn der Sollwert der regenerativen Bremsung gemäß der zweiten Berechnungsart erzeugt wird, dieser Sollwert null ist.

3. Verfahren zur Steuerung nach einem der Ansprüche 1 bis 2, welches einen Schritt umfasst, der darin besteht, eine zeitliche Filterung (102) auf das Flagsignal anzuwenden, das vor dem Schritt der Erkennung einer Änderung von Werten empfangen wurde.

4. Computerprogrammprodukt, welches Anweisungen umfasst, um die Schritte des Verfahrens nach einem der Ansprüche 1 bis 3 auszuführen, wenn diese Anweisungen von einem Prozessor ausgeführt werden.

5. Vorrichtung zur Steuerung der regenerativen Bremsung (10) eines Fahrzeugs, das mit einem ersten, regenerativen Bremsmittel und mit einem zweiten Bremsmittel, das von dem ersten Bremsmittel verschieden ist, ausgestattet ist und dafür ausgelegt ist, einen Sollwert der regenerativen Bremsung in Abhängigkeit von einem Bremsanforderungssignal, das von einem Fahrerpedal des Fahrzeugs ausgegeben wird, gemäß einer ersten Art der Sollwerterzeugung zu erzeugen, wobei die Vorrichtung umfasst:
Empfangsmittel zum Empfangen eines Drucksignals des Hauptbremszylinders (P) und Vergleichsmittel zum Vergleichen des Wertes des Signals mit Druckschwellenwerten, und
Empfangsmittel zum Empfangen eines Flagsignals (flag_reg), das von einem aktiven Sicherheitssystem des Fahrzeugs ausgegeben wurde, und
Verarbeitungsmittel, die dazu eingerichtet sind, die Änderungen von Werten des empfangenen Flagsignals zu erkennen,
- einen Zählerwert (Count) zu inkrementieren, wenn das empfangene Flagsignal seinen Wert ändert, um einen Wert anzunehmen, der einer Aktivierung einer Regelung durch das aktive Sicherheitssystem entspricht, falls der Druck des Hauptbremszylinders niedriger als ein erster Druckschwellenwert (THR_P) ist,
- den Zählerwert (Count) zu dekrementieren, wenn der Druck des Hauptbremszylinders einen zweiten Druckschwellenwert überschreitet, falls das Flagsignal auf einem Wert bleibt, der einer Nichtaktivierung einer Regelung durch das aktive Sicherheitssystem entspricht,
- den Zähler mit einem Schwellenwert (THR) zu vergleichen und, falls der Zähler diesen Schwellenwert erreicht, ein Steuersignal (S) zu erzeugen, um die Erzeugung des Sollwertes der regenerativen Bremsung gemäß der ersten Berechnungsart zu beenden und eine Erzeugung dieses Sollwertes der regenerativen Bremsung gemäß einer zweiten Berechnungsart zu vorzuschreiben.

6. System zur Steuerung der regenerativen Bremsung eines Fahrzeugs, das mit einem ersten, regenerativen Bremsmittel (13) und mit einem zweiten Bremsmittel, das von dem ersten Bremsmittel verschieden ist, ausgestattet ist, umfassend:
ein Modul zur Erzeugung eines Sollwertes der regenerativen Bremsung (12), das geeignet ist, den Sollwert der regenerativen Bremsung in Abhängigkeit von einem Bremsanforderungssignal, das von einem Fahrerpedal des Fahrzeugs ausgegeben wird, gemäß einer ersten Berechnungsart und gemäß einer zweiten Berechnungsart zu erzeugen, und eine Vorrichtung zur Steuerung (10) nach Anspruch 5.

7. System nach Anspruch 6, wobei das Modul zur Erzeugung ein Modul zum Bremsmanagement (12) umfasst, das dazu eingerichtet ist, den Sollwert der regenerativen Bremsung zu berechnen, indem ein Bremswert, der für eine von dem zweiten Bremsmittel (C_{c}) durchgeführte Bremsung repräsentativ ist, mit einem Koeffizienten multipliziert wird, der von der vorgeschriebenen Berechnungsart abhängt.

8. Kraftfahrzeug (1), welches das System zur Steuerung nach Anspruch 7 umfasst.

9. Kraftfahrzeug (1) nach Anspruch 8, welches einen elektrischen Aktuator (13) umfasst, der geeignet ist, eine Bremsung an den Hinterrädern (14) zu bewirken.

## Claims

1. Method for controlling regenerative braking of a vehicle equipped with a first, regenerative, braking means and with a second braking means separate from the first braking means, which method is designed to generate a regenerative braking setpoint as a function of a braking request signal coming from a driver pedal of the vehicle, according to a first setpoint generation mode, the method comprising:
reception of a master cylinder pressure signal (P), and comparison with pressure thresholds,
reception of a flag signal (flag_reg) coming from an active safety system of the vehicle,
detection of the value changes of the received flag signal,
when the received flag signal changes value to take a value corresponding to activation of regulation by the active safety system, incrementation of a counter value (Count) if the master cylinder pressure is lower than a first pressure threshold (THR_P),
when the master cylinder pressure exceeds a second pressure threshold, decrementation of the counter value (Count) if the flag signal remains at a value corresponding to a non-activation of a regulation by the active safety system,
comparison of the counter with a threshold (THR), and if the counter reaches said threshold, formation of a control signal (S) so as to end the generation of the regenerative braking setpoint according to the first calculation mode and to impose generation of this regenerative braking setpoint according to a second calculation mode.

2. Control method according to Claim 1, wherein when the regenerative braking setpoint is generated according to the second calculation mode, this setpoint is zero.

3. Control method according to either of Claims 1 and 2, comprising a step consisting in applying a time filtering (102) to the received flag signal prior to the step of detecting a value change.

4. Computer program product comprising instructions for carrying out the method steps according to any one of Claims 1 to 3 when these instructions are executed by a processor.

5. Device (10) for controlling regenerative braking of a vehicle equipped with a first, regenerative, braking means and with a second braking means separate from the first braking means, which device is designed to generate a regenerative braking setpoint as a function of a braking request signal coming from a driver pedal of the vehicle, according to a first setpoint generation mode, the device comprising:
reception means for receiving a master cylinder pressure signal (P) and comparison means for comparing the value of the signal to pressure thresholds, and reception means for receiving a flag signal (flag_reg) coming from an active safety system of the vehicle, and processing means arranged so as to detect the value changes of the received flag signal,
- to increment a counter value (Count) when the received flag signal changes value to take a value corresponding to activation of regulation by the active safety system, if the master cylinder pressure is lower than a first pressure threshold (THR_P),
- to decrement the counter value (Count) when the master cylinder pressure exceeds a second pressure threshold, if the flag signal remains at a value corresponding to a non-activation of a regulation by the active safety system,
- to compare the counter with a threshold (THR) and, if the counter reaches said threshold, to form a control signal (S) so as to end the generation of the regenerative braking setpoint according to the first calculation mode and to impose generation of this regenerative braking setpoint according to a second calculation mode.

6. System for controlling regenerative braking of a vehicle equipped with a first, regenerative, braking means (13) and with a second braking means separate from the first braking means, comprising
a module for generating a regenerative braking setpoint (12), capable of generating the regenerative braking setpoint as a function of a braking request signal coming from a driver pedal of the vehicle, according to a first calculation mode and according to a second calculation mode, and
a control device (10) according to Claim 5.

7. System according to Claim 6, wherein the generation module comprises a braking management module (12) arranged in order to calculate the regenerative braking setpoint value by multiplying a braking value representative of the braking carried out by the second braking means (C_{c}) by a coefficient which depends on the calculation mode imposed.

8. Motor vehicle (1) comprising the control system according to Claim 7.

9. Motor vehicle (1) according to Claim 8, comprising an electrical actuator (13) capable of exerting braking on the rear wheels (14).
